# EUROPEAN PATENT APPLICATION

(11) **EP 1 522 978 A1**
(43) Date of publication of application: **13.04.2005**
(21) Application number: 04024083.0
(22) Date of filing: 08.10.2004
(51) Int. Cl.: G07F 17/32, A63F 13/08

(54) **Gaming machine and game medium receiving unit mountable on gaming machine**

(30) Priority: 08.10.2003 JP 2003349900; 22.09.2004 JP 2004274865
(71) Applicant: Aruze Corp., Tokyo 135-0063 (JP)
(72) Inventor: Sasaki, Yoshitomo, Tokyo 135-0063 (JP)
(74) Representative: Grünecker, Kinkeldey, Stockmair & Schwanhäusser Anwaltssozietät

(57) **Abstract**

A gaming machine in the present invention having a gaming unit required for playing a game and a game medium receiving device for receiving a game medium required for playing the game, includes a first and a second cabinet which are different in size from each other. The gaming unit is incorporated in the first cabinet, and the game medium receiving device is incorporated in the second cabinet.

## Description

### BACKGROUND OF THE INVENTION

### Field of the Invention

The present invention relates to a gaming machine and a game medium receiving unit mountable on the gaming machine.

### Related Background Art

Conventionally, a variety of gaming machines on which various games can be played have been known. Examples of a slot machine that is known as one kind of the gaming machines include well-known two types as follows: one is a slot machine having a variable display device in which a plurality of mechanical reels each for displaying a plurality of symbols are arranged (also referred to as a reel unit); and the other is a slot machine having an image display device for displaying variable display images of a plurality of symbols as if mechanical reels are rotating (a so-called video slot machine). In addition, in the former type of slot machine, an image display device for mainly displaying a performance image may be placed on the front face of the mechanical reels.
On the other hand, in a conventional gaming machine, a device required for playing games (hereinafter, referred to as a "gaming unit") such as a variable display device or an image display device is incorporated in a cabinet. Depending on the difference in structure of the cabinet, gaming machines are classified into a type on which a player plays a game while sitting (a so-called slant-type, see, for example, Japanese Patent Application Laid-open No. 2003-67810: Patent Document 1) and a type on which a player plays a game while standing (a so-called upright-type, see, for example, Japanese Patent Application Laid-open No. 2001-198265: Patent Document 2).

Incidentally, the conventional gaming machine as disclosed also in Patent Document 1 or 2 is configured such that a game medium (cash such as bill and coins, and media other than cash such as tokens, medals, and prepaid cards; bills in Patent Documents 1 and 2) is thrown or inserted thereinto, thereby allowing a game to be played, and therefore a game medium receiving device which receives the game medium thrown or inserted by a player is incorporated in the cabinet. For example, in the case of the game machine disclosed in Patent Document 1, the game medium receiving device has a bill discrimination part for discriminating the authenticity of an inserted game medium (bill) and a housing part (safe) for housing the bills judged to be authentic.

### SUMMARY OF THE INVENTION

However, the conventional gaming machines have the following problems due to incorporation of the game medium receiving device in the cabinet.
Since the conventional gaming machine has the gaming unit incorporated in the cabinet, the game medium receiving device needs to be incorporated aside from the center in the width direction of the cabinet. However, the game medium receiving device is considerably large in size, and therefore the game medium receiving device incorporated in the cabinet makes it difficult to place at the center in the width direction of the cabinet the visible part for the player to view the gaming unit from the front side. Accordingly, the visible part looks shifted aside, which might cause the player to feel uncomfortable. For example, in a game machine 10 disclosed in Patent Document 1, a bill receiving device 16 is incorporated on the right side of a monitor 12, and therefore the monitor 12 looks shifted leftward in the cabinet. Further, when many game machines 10 are placed adjacent to each other, they become visually unbalanced.

Further, the game medium receiving device has a bill discrimination part and a housing part which may be removed during maintenance. Therefore, it is preferable to form a large opening portion in the cabinet for easy work.
However, since the cabinet in which the game medium receiving device is incorporated has the visible part for the gaming unit and other components, it is difficult to form such a large opening portion exclusively used for the game medium receiving device. For example, in the game machine 10 disclosed in Patent Document 1, a control part on the front side interferes with formation of the large opening portion exclusively used for the game medium receiving device, causing restraint on the space and placement position of the opening portion.

The present invention has been developed to solve the above problems, and its object is to provide a gaming machine having a structure presenting an impression of almost symmetry even if a game medium receiving device is incorporated therein in which the game medium receiving device can be easily maintained, and a game medium receiving unit.

To achieve the above object, the present invention is a gaming machine having a gaming unit required for playing a game and a game medium receiving device for receiving a game medium required for playing the game, which is characterized by including; a first and a second cabinet which are different in size from each other, wherein the gaming unit is incorporated in the first cabinet, and the game medium receiving device is incorporated in the second cabinet.
Since this gaming machine has the second cabinet in which the game medium receiving device is incorporated, in addition to the gaming machine in which the gaming unit is incorporated, the game medium receiving device does not need to be incorporated in the first cabinet.

Further, it is possible that the first cabinet has a visible part for viewing the gaming unit placed at a substantially middle in a width direction thereof and that the second cabinet is mounted on a side portion of the first cabinet. Owing to this configuration, the second cabinet hardly hinders the player from viewing the visible part in the first cabinet.
Further, it is preferable that the second cabinet has a configuration attachable to/detachable from the first cabinet. In this case, the second cabinet can be attached to or detached from the first cabinet depending on whether the game medium receiving device is necessary or not.
It is preferable that the second cabinet is narrower in width and lower in height than the first cabinet. This prevents the second cabinet from hindering the player from playing a game.

It is suitable that the second cabinet has an insertion part for inserting the game medium, the insertion part being placed below the visible part in the first cabinet. In this case, the structure is made such that when the player inserts a game medium during play of a game, the insertion part hardly comes into the sight of the player.
Further, it is preferable that the second cabinet has a first pivotable open door and a second pivotable open door, the first and second open doors having a closed contact structure that open side end portions which are not pivotally supported of the first and second open doors are brought into contact with each other when the first and second open doors are closed. This allows the first and second open doors to be opened/closed in a double-door opening/closing manner.

It is possible that the game medium receiving device is incorporated inside the first and second open doors in the second cabinet.
Further, it is also possible to further include a locking means for locking the first and second open doors in a manner to extend over the first and second open doors. This can lock and unlock the first and second open doors by one locking operation and reduce the number of parts.
Further, it is possible that the first cabinet has a base portion on which various kinds of control buttons are placed below the visible part, the base portion and the first open door being formed to be substantially flush with each other.

Furthermore, the present invention provides a game medium receiving unit which is attachably/detachably mounted on a side portion of a gaming machine including a gaming unit required for playing a game and has a game medium receiving device for receiving a game medium required for playing the game, the game medium receiving unit including a cabinet in which the game medium receiving device is incorporated, wherein the cabinet has a first pivotable open door and a second pivotable open door, the first and second open doors having a closed contact structure that open side end portions which are not pivotally supported of the first and second open doors are brought into contact with each other when the first and second open doors are closed.
It is possible that, in this game medium receiving unit, the game medium receiving device is incorporated inside the first and second open doors in the cabinet.
Further, it is preferable to further include a locking means for locking the first and second open doors in a manner to extend over the first and second open doors.

The present invention will be more fully understood from the detailed description given hereinbelow and the accompanying drawings which are given by way of illustration only, and thus are not to be considered as limiting the present invention.

### BRIEF DESCRIPTION OF THE DRAWINGS

Fig. 1 is a perspective view showing the entire configuration of a slot machine according to a first embodiment;
Fig. 2 is a perspective view showing a second cabinet with its doors open;
Fig. 3 is an exploded perspective view of a bill receiving device to be incorporated in the second cabinet;
Figs. 4 is views showing a locking method by a locking means for the open doors in the second cabinet, (a) showing a state of a first door open, (b) showing a state of the first door and a second door closed, and (c) showing a state of the first and second doors locked, respectively;
Fig. 5 is a view schematically showing a joint portion between a first and a second cabinet and an electrical connection state between the first and second cabinets; and
Fig. 6 is a perspective view showing the entire configuration of a slot machine according to a second embodiment.

### DESCRIPTION OF THE PREFERRED EMBODIMENTS

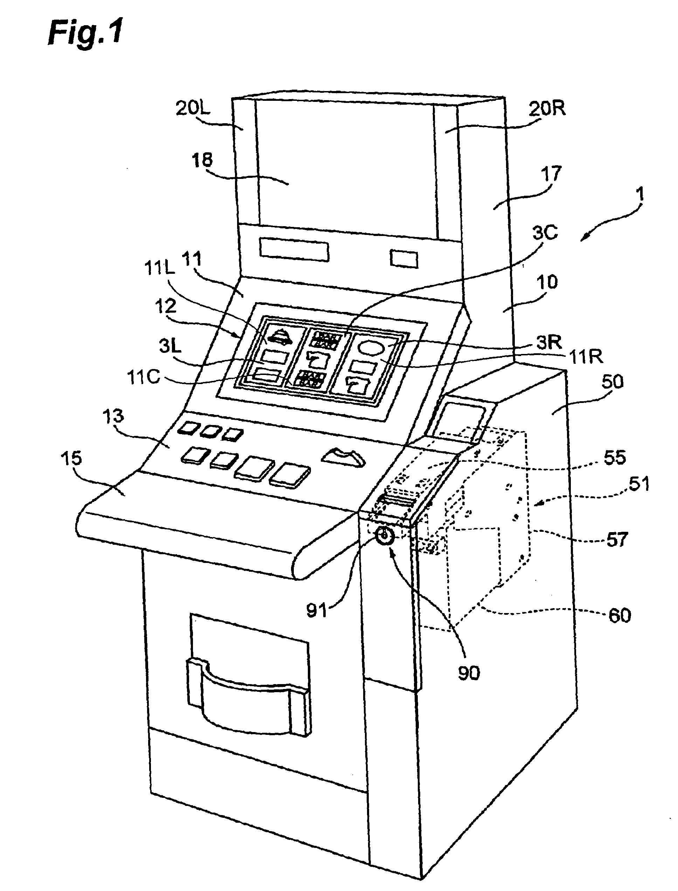

Preferred embodiments of a gaming machine according to the present invention will be described below in detail with reference to Fig. 1 to Fig. 6 taking a slant-type slot machine as an example. Note that the same reference numbers are used for the same components and overlapping description thereof is omitted.

### (First Embodiment)

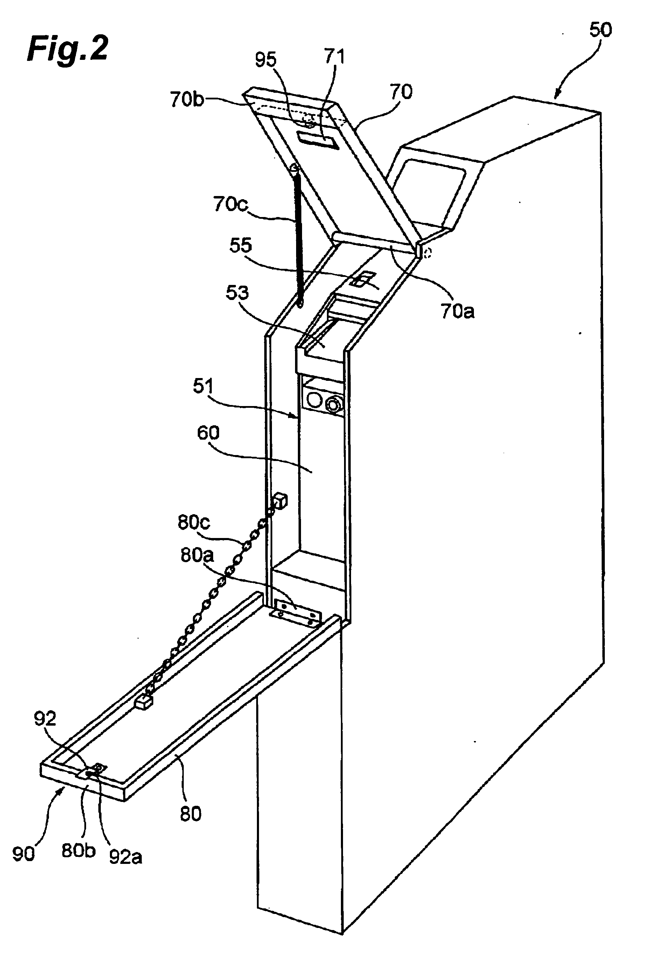

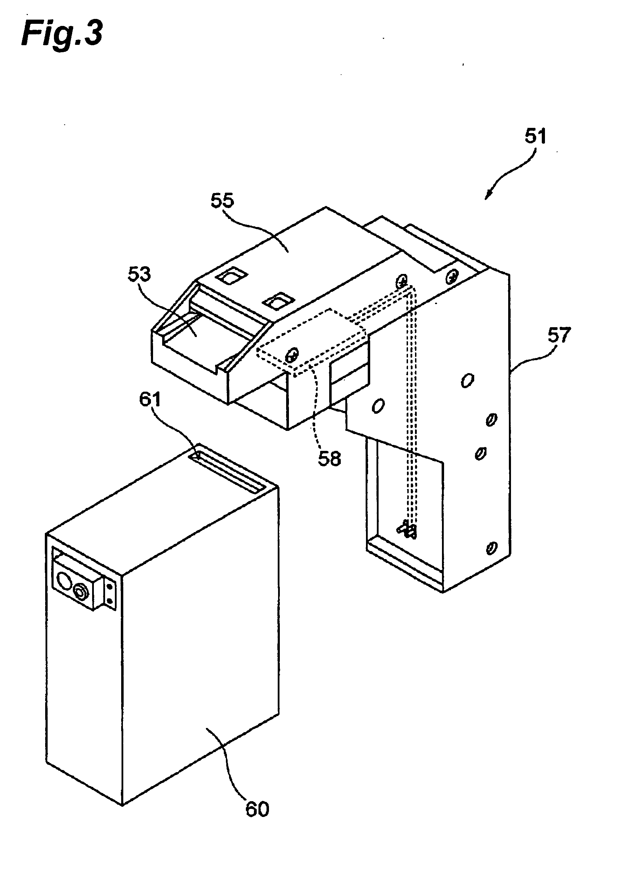

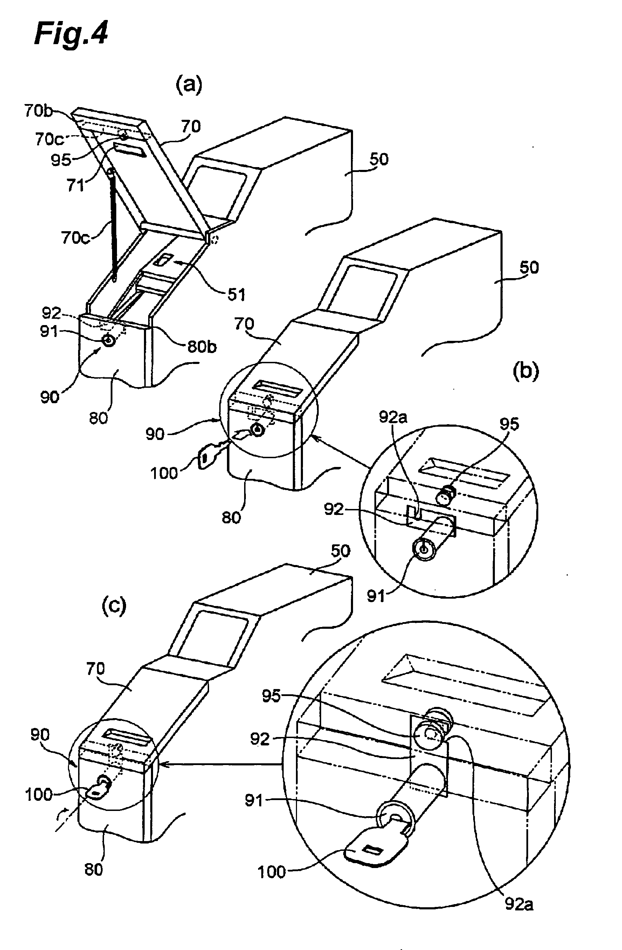

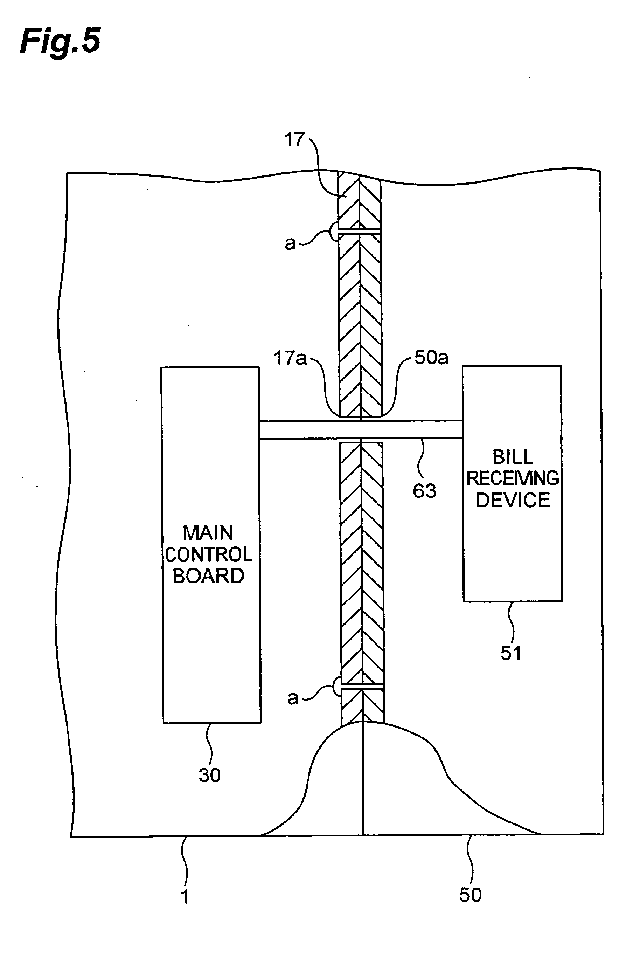

Fig. 1 is a perspective view showing the entire configuration of a slot machine 1 according to the present embodiment, and Fig. 2 is a perspective view showing a second cabinet with its doors open. Fig. 3 is an exploded perspective view of a bill receiving device to be incorporated in the second cabinet, and Figs. 4 is views showing a locking method by a locking means for the open doors in the second cabinet, (a) showing a state of a first door open, (b) showing a state of the first door and a second door closed, and (c) showing a state of the first and second doors locked, respectively. Fig. 5 is a view schematically showing a joint portion between a first and a second cabinet and an electrical connection state between the first and second cabinets.

The slot machine 1 has, as shown in Fig. 1, a first cabinet 10 and a second cabinet 50 which are different in size from each other. Further, a reel unit (a gaming unit in the present invention) is incorporated in the first cabinet 10, and a bill receiving device 51 (a game medium receiving device in the present invention) is incorporated in the second cabinet 50.
The first cabinet 10 has an open/close door 11. The first cabinet 10 further has a housing part inside the open/close door 11, and the reel unit is incorporated in the housing part. The reel unit comprises three mechanical reels 3L, 3C, and 3R arranged side by side in a line to be rotatable, on each of which symbols are drawn.

The open/close door 11 is placed at a position on the slightly upper side of the middle in the vertical direction of the slot machine 1 so that a player (not shown) can look down the door from the above while sitting on the front side of the slot machine 1. Further, the open/close door 11 has three vertically long window parts 11L, 11C, and 11R for allowing the respective reels 3L, 3C, and 3R to be viewed from the outside so that the reels 3L, 3C, and 3R can be viewed from the outside through the respective window parts 11L, 11C, and 11R. The window parts 11L, 11C, and 11R, which are a visible part of the present invention, are placed at a substantially middle part in the width direction of the first cabinet 10, and the reels 3L, 3C, and 3R are also placed at a substantially middle part in the width direction of the first cabinet 10 in correspondence with the respective window parts 11L, 11C, and 11R.

In addition, the open/close door 11 is arranged in an upward slant form such that it falls backward on the upper side and thus rises from a front side to a rear side to allow the reels 3L, 3C, and 3R to be easily viewed. Furthermore, the open/close door 11 is configured to open/close in the width direction (the right-left direction) with its left end portion as seen from the front used as a shaft.

The first cabinet 10 further has a base portion 13 having a slant face gentler than the open/close door 11 below the open/close door 11. On the base portion 13, various kinds of control members (various kinds of buttons such as a BET button, a reel rotation button, a reel stop button, and so on, a coin slot, and so on) are arranged which are required for playing games.

Further, the slot machine 1 is provided with an armrest 15 including a flat surface extending in a substantially horizontal direction on the front side of the base portion 13. Provision of the armrest 15 allows the player in operating the various kinds of control members on the base portion 13 to perform operation with his or her arms and wrists rested thereon while sitting on a not-shown chair or the like.

On the other hand, the first cabinet 10 comprises two side panel portions 17 vertically standing from the bottom portion on the rear side of the open/close door 11. Besides, above the open/close door 11 and between the side panel portions 17, provided are, for example, a payout table 18 displaying information on games such as combinations of prize symbols and payout amount, and speakers 20L and 20R which generate effective performance sound to increase amusement in game during play of a game, and so on. Note that the side panel portion 17 on the side to which the second cabinet 50 is to be secured (the right side in the drawing) is formed with a cord hole 17a having a size to allow a later-described connection cord 63 to be passed through as shown in Fig. 5.

Further, the slot machine 1 has, as shown in Fig. 1, a transmissive liquid crystal display device 12 as a device for increasing the amusement in games. The liquid crystal display device 12 is provided on the open/close door 11. The liquid crystal display device 12 comprises a protective glass, a display plate, a liquid crystal panel, a light guide plate, a reflective film, a fluorescent lamp, a table carrier package (TCP) loaded with an IC for driving the liquid crystal panel, and so on, to perform transmissive display within a region corresponding to the window parts 11L, 11C, and 11R so that the reels 3L, 3C, and 3R can be viewed. For example, the liquid crystal display device 12 displays various kinds of moving performance images, information required for the player to carry on the game with advantage, and so on according to the game.

Further, the slot machine 1 has, as shown in Fig. 5, a main control board 30 having a CPU (Central Processing Unit), an RAM (Random Access Memory), an ROM (Rear Only Memory), and so on to conduct operation control of the slot machine 1. To the main control board 30, the bill receiving device 51 that will be described later is electrically connected.

The second cabinet 50 has, as shown in Fig. 1, a thin, substantially rectangular parallelepiped shape which is lower in height (about half the height of the first cabinet 10) and narrower in breadth than the first cabinet 10. Further, as shown in Fig. 5, the second cabinet 50 has such a configuration attachable to/detachable from (the side portion of) the first cabinet 10 that the second cabinet 50 is secured to the side panel 17 of the first cabinet 10 by screwing using screws a from the inside of the first cabinet 10, while the second cabinet 50 can be detached from the first cabinet 10 by removing the screws a. Further, the second cabinet 50 is formed with a cord hole 50a at a position corresponding to the cord hole 17a.

The bill receiving device 51 has, as shown in Fig. 1 and Fig. 3, a receiving main body unit 57 and a cash container 60 and is placed below the window parts 11L, 11C, and 11R in the first cabinet 10. This bill receiving device 51 is designed to be held, incorporated at a predetermined position by a not-shown engagement structure provided inside the second cabinet 50. Further, as shown in Fig. 5, the bill receiving device 51 is electrically connected to the main control board 30 built in the first cabinet 10 via the connection cord 63 passing through the cord hole 50a and the cord hole 17a in the first cabinet 10.

The receiving main body unit 57 has a bill receiving port 53 which receives bills inserted from the outside of the slot machine 1 and a bill discrimination unit 55 which discriminates between an authentic bill and a counterfeit bill among the bills inserted through the bill receiving port 53. The bill discrimination unit 55 has a built-in circuit board 58 which controls the operation of discriminating bills. On the circuit board 58, a control circuit is mounted which has a function of controlling drive of a motor which conveys bills, detecting a signal from a validation sensor for validating bills to carry out authenticity judgment, and sending a signal to the cash container 60 side, and so on.

As shown in Fig. 2 and Fig. 3, the cash container 60 stocks bills which have been judged to be valid (authentic bills) in the bill discrimination unit 55. The cash container 60 has a rectangular bottom portion, four side portions, and a top portion provided with a bill housing port 61 for receiving the bills which have been inserted into the bill receiving port 53 and judged to be authentic bills, and is thus formed in a generally rectangular parallelepiped shape using metal such as iron or the like. The cash container 60 has at the bottom portion an open/close lid (not shown) for taking out the bills housed therein. Further, the cash container 60 has such a configuration that it can be attached to the front face of the receiving main body unit 57 below the discrimination unit 55 and drawn out frontward to be detached therefrom.

Further, the second cabinet 50 has an open door 70 (a first open door in the present invention) and an open door 80 (a second open door in the present invention) on the top face and the front face, respectively. The open doors 70 and 80 are supported to be pivotable about support portions 70a and 80a which pivotally support them respectively and have such a structure that when both of them are closed, open side end portions (tip portions) 70b and 80b which are not pivotally supported on the sides opposite to the pivotally supported portions 70a and 80a are brought into contact with each other (a closed contact structure). Having the closed contact structure, the open doors 70 and 80 can be opened in a double-door opening manner from the top face to the front face as shown in Fig. 2, thereby providing a wide opening. In addition, since the bill receiving device 51 is incorporated inside the open doors 70 and 80, the bill receiving device 51 can be easily taken out by opening both the open doors 70 and 80.

Each of the open doors 70 and 80 further has a holding member for keeping its open state. In the second cabinet 50 shown in Fig. 2, they have a coupling bar 70c and a chain 80c bendable at the respective middle parts.
The open door 70 has a bill insertion port 71 (an insertion part in the present invention) to correspond to the bill receiving port 53 in the bill receiving device 51. Further, the open door 70 is configured such that its surface is substantially flush with the surface of the base portion 13 in the first cabinet 10.

The open doors 70 and 80 further have a locking means 90 as shown in Fig. 2 and Fig. 4. The locking means 90 has a locking portion 91 provided on the top end part of the open door 80, a plate 92, and an engagement member 95 provided on an inner wall portion 70d that is on the back side of the open door 70, and has such a configuration as to be able to lock both the open doors 70 and 80 in a manner to extend over them.
The plate 92 is a rectangular plate member which is secured to the locking portion (cylinder) 91 and rotates with a predetermined key 100 when the key 100 is inserted thereinto and rotationally operated, and is formed with a notch 92a in a recessed shape. Into this notch 92a, the engagement member 95 fits.
The engagement member 95 is placed in a direction crossing the rotational direction of the plate 92 and has a reduced diameter portion corresponding to the notch 92a so that the notch 92a is caught on the reduced diameter portion from the outside.

According to the locking means 90, the plate 92 in an unlocked (open) state is in a horizontal state as shown in Figs. 4(a) and 4(b). When the key 100 is inserted into the locking portion 91 and rotationally operates in the clockwise direction from this state, the plate 92 rotates and its long side rises, so that the notch 92a fits over the engagement member 95 from the side as shown in Fig. 4(c). In this way, when the notch 92a of the plate 92 fits over the engagement member 95 provided on the open door 70, the engagement member 95 is restrained from moving upward and the plate 92 is restrained from moving frontward by the engagement member 95 and the inner wall portion 70d.

Moreover, according to the locking means 90, as shown in Fig. 2, the open doors 70 and 80 are closed (see Figs. 4 (a) and 4(b)), and then the key 100 is inserted into the locking portion 91 and rotationally operated rightward, whereby the notch 92a of the plate 92 fits over the engagement member 95 (see Fig. 4(c)). This locks the open door 70 to prevent it from opening upward as shown in Fig. 4 (a), and locks the open door 80 to prevent it from opening frontward. Accordingly the locking means 90 engages both the open doors 70 and 80 in a manner to extend over them, so that one locking operation can lock both the open doors 70 and 80. In addition, only one open operation of rotating the key 100 in the counterclockwise direction by 90 degrees from the locking state of both of them as shown in Fig. 4(c) can open both or one of the open doors 70 and 80.

Since the slot machine 1 having the above-described configuration has the second cabinet 50 in which the game medium receiving device 51 is incorporated, separately from the first cabinet 10 in which the reel unit is incorporated, the game medium receiving device 51 does not need to be incorporated in the first cabinet 10. This eliminates constraint on the layout about the arrangement of the window parts 11L, 11C, and 11R in the first cabinet 10, allowing the window parts 11L, 11C, and 11R to be placed at a substantially middle in the right-left direction to present such an impression that the window parts are almost symmetrical. Therefore, the slot machine 1 has a good visual balance as viewed from the player as well as high design properties in appearance.

Further, the second cabinet 50 is mounted on a side portion of the first cabinet 10 and thus hardly hinders the player from viewing the window parts 11L, 11C, and 11R in the first cabinet 10. The second cabinet 50 is detachable from the first cabinet 10 by removing the screws a and thus can be an individual bill receiving unit with the game medium receiving device 51 incorporated therein.
In particular, the second cabinet 50 is narrower in width than and as low as about half the height of the first cabinet 10, and thus never hinders the player from playing a game (a slot game) while viewing the window parts 11L, 11C, and 11R. Further, the second cabinet 50 has such a configuration that the game medium receiving device 51 is placed below the window parts 11L, 11C, and 11R and the bill insertion port 71 is placed below the window parts 11L, 11C, and 11R, whereby when the player inserts a bill into the bill insertion port 71 during play of the game, the bill insertion port 71 hardly comes into the middle of sight of the player so that the player thus easily concentrates on the game.

Further, since the second cabinet 50 has the open doors 70 and 80, the open doors 70 and 80 opening/closing in a double-door opening/closing manner, a large opening portion can be obtained when both the open doors 70 and 80 are opened. Therefore, the device housed in the second cabinet 50 can be easily taken in/out as required and, in particular, maintenance work can be easily performed on the game medium receiving device 51 since it is housed inside the open doors 70 and 80. Further, any one of the open doors 70 and 80 can be opened depending on the maintenance work, leading to increased workability. In other words, it is necessary to open only the open door 70 when the bill discrimination unit 55 in the bill receiving device 51 requires maintenance or the like, and to open only the open door 80 when the cash container 60 is taken in/out.

Further, the slot machine 1 has the locking means 90 and therefore can lock both the open doors 70 and 80 by one locking operation, leading to ease of opening/closing operation of the open doors 70 and 80 associated with the maintenance work. Furthermore, the open door 70 is configured to be flush with the base portion 13, presenting feeling of unity with the base portion 13. Further, the slot machine 1 has a neat design in appearance without protrusions and depressions. Moreover, the locking means 90 can lock and unlock both the open doors 70 and 80 by a simple structure, resulting in a reduction in the number of parts.

Further, when a number of slot machines 1 are placed side by side, spaces having a height of about half that of the slot machine 1 are formed between the slot machines 1, thus avoiding feeling of pressure on players. In addition, a number of slot machines 1 each presenting an impression of almost symmetry are placed in appearance, thereby giving better looking as a whole.

Although an embodiment of the present invention has been described above, the present invention is not limited to the above-described embodiment, but can be configured as described below, for example.
Although the above-described slot machine 1 has such a configuration that the second cabinet 50 is detachable from the first cabinet 10, the second cabinet 50 may be integrated with the first cabinet 10. However, when the second cabinet 50 has a configuration to be detachable from the first cabinet 10, the second cabinet 50 and the bill receiving device 51 housed therein become a cash receiving unit independent from the first cabinet 10 and individually operates (a game medium receiving unit in the present invention). This bill receiving unit can be attached afterward to the slot machine 1 as required, leading to a reduction in size of the slot machine 1 as a whole.

In a gaming machine requiring no bill receiving device, the second cabinet can be kept detached from the first cabinet unlike the slot machine 1. This facilitates a reduction in size of the entire gaming machine, whereby a reduction in space can be achieved. In a gaming machine requiring the bill receiving device, the second cabinet may be attached afterward.

The entire shape of the first cabinet 10 and the entire shape of the second cabinet 50 are not limited to the configurations shown in the drawings, but may be changed as necessary. Besides, the locking portion 91 of the locking means 90 may be formed on the open door 70 on the top face side, or both the doors may be locked by another locking means. Further, the game medium receiving device is configured to handle not only bills but also various kinds of game media. The open door 70 and the open door 80 are not separated in two parts, but may be integrated.

### (Second Embodiment)

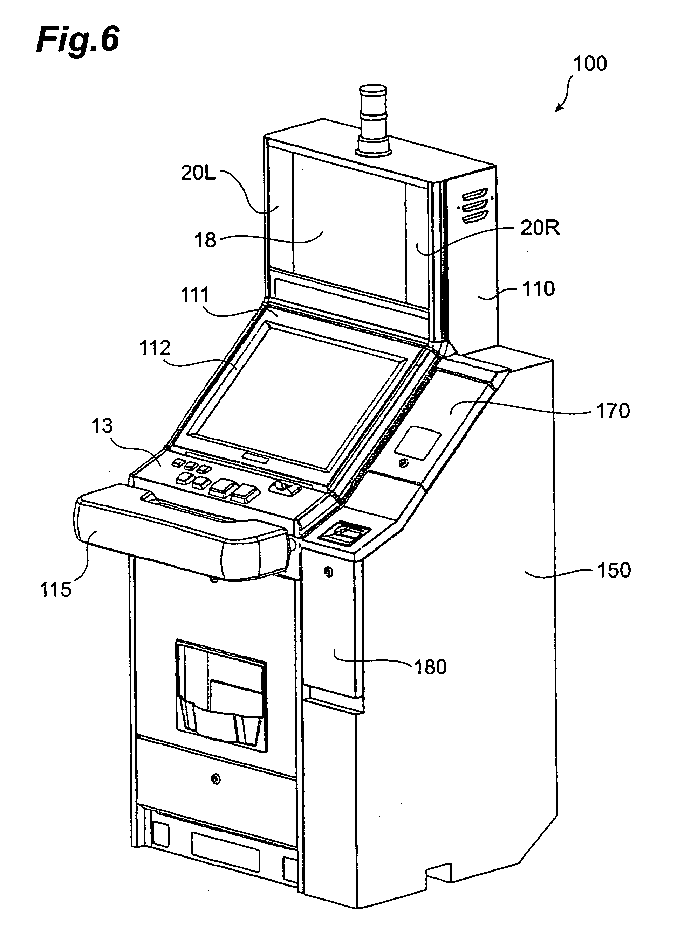

A slot machine 100 in the present embodiment has a configuration as shown in Fig. 6. The slot machine 100 has, similarly to the above-described slot machine 1, a first and a second cabinet and a reel unit and a bill receiving device 51, but has two cabinets 110 and 150 different in shape from the first and second cabinets 10 and 50. Note that the following description will be presented mainly on points different from the slot machine 1 in the first embodiment, and description on common points will be omitted or simplified.
The first cabinet 110 is different, as compared to the first cabinet 10, mainly in that its open/close door 111 having a window part 112 is rimmed with a rectangular shape close to a substantially square and that its armrest 115 has a different shape.

Besides, the second cabinet 150 is different, as compared to the second cabinet 50, in that it is high, that its open door 170 has a slant substantially similar to that of the open/close door 111, and that the open door 170 and an open door 180 can be locked by individual locking means respectively. Further, the second cabinet 150 is different even in that the open door 170 is not flush with a base portion 13.
The second cabinet 150 is made higher than the second cabinet 50 so that a ticket printer can be built therein.
Since the slot machine 100 having the above-described configuration also has the second cabinet 150 separately from the first cabinet 110 similarly to the slot machine 1, the game medium receiving device 51 does not need to be incorporated in the first cabinet 110 so that the window part 112 can be placed in a substantially middle in the width direction, thereby presenting an impression of almost symmetry. Accordingly, the slot machine 100 also has a good visual balance as viewed from the player as well as high design properties in appearance.

Further, both the open door 170 and the open door 180 can be locked and unlocked by the individual locking means, the open/close operation of the open doors 170 and 180 associated with the maintenance work is easy.
According to the present invention, a gaming machine having a structure presenting an impression of almost symmetry even if a game medium receiving device is incorporated therein in which the game medium receiving device can be easily maintained, and a game medium receiving unit easy to maintain can be obtained.
While the description is presented by taking the example of the slant-type slot machine as an example in each of the above-described embodiments, the present invention is also applicable to other gaming machines each having a gaming unit and a game medium receiving device. The present invention is also applicable to upright-type gaming machines each having a gaming unit and a game medium receiving device.

It is apparent that various embodiments and modifications of the present invention can be embodied, based on the above description. Accordingly, it is possible to carry out the present invention in the other modes than the above best mode, within the following scope of claims and the scope of equivalents.

## Claims

1. A gaming machine comprising a gaming unit required for playing a game and a game medium receiving device for receiving a game medium required for playing the game, said machine comprising;
a first and a second cabinet which are different in size from each other,
wherein said gaming unit is incorporated in said first cabinet, and said game medium receiving device is incorporated in said second cabinet.

2. The gaming machine according to claim 1, wherein:
said first cabinet has a visible part for viewing said gaming unit placed at a substantially middle in a width direction thereof; and
said second cabinet is mounted on a side portion of said first cabinet.

3. The gaming machine according to claim 1 or 2, wherein said second cabinet has a configuration attachable to/detachable from said first cabinet.

4. The gaming machine according to any of claims 1 through 3, wherein said second cabinet is narrower in width and lower in height than said first cabinet.

5. The gaming machine according to any of claims 2 through 4, wherein said second cabinet has an insertion part for inserting said game medium, said insertion part being placed below the visible part in said first cabinet.

6. The gaming machine according to any of claims 1 through 5, wherein said second cabinet has a first pivotable open door and a second pivotable open door, said first and second open doors having a closed contact structure that open side end portions which are not pivotally supported of said first and second open doors are brought into contact with each other when said first and second open doors are closed.

7. The gaming machine according to claim 6, wherein said game medium receiving device is incorporated inside said first and second open doors in said second cabinet.

8. The gaming machine according to claim 6 or 7, further comprising a locking means for locking said first and second open doors in a manner to extend over said first and second open doors.

9. The gaming machine according to any of claims 6 through 8, wherein said first cabinet has a base portion on which various kinds of control buttons are placed below the visible part, said base portion and said first open door being formed to be substantially flush with each other.

10. A game medium receiving unit which is attachably/detachably mounted on a side portion of a gaming machine comprising a gaming unit required for playing a game and has a game medium receiving device for receiving a game medium required for playing the game, said game medium receiving unit comprising:
a cabinet in which said game medium receiving device is incorporated,
wherein said cabinet has a first pivotable open door and a second pivotable open door, said first and second open doors having a closed contact structure that open side end portions which are not pivotally supported of said first and second open doors are brought into contact with each other when said first and second open doors are closed.

11. The game medium receiving unit according to claim 10, wherein said game medium receiving device is incorporated inside said first and second open doors in said cabinet.

12. The game medium receiving unit according to claim 10 or 11, further comprising a locking means for locking said first and second open doors in a manner to extend over said first and second open doors.
